# NEUE EUROPÄISCHE PATENTSCHRIFT

(11) **EP 1 036 800 B2**
(45) Veröffentlichungstag und Bekanntmachung des Hinweises auf die Entscheidung über den Einspruch: **03.11.2004**
(45) Hinweis auf die Patenterteilung: 30.01.2002
(21) Anmeldenummer: 00104415.5
(22) Anmeldetag: 02.03.2000
(51) Int. Cl.: C08F 2/22, C09J 157/00, C09D 157/00

(54) **Verfahren zur Herstellung von wässrigen Polymerdispersionen mit hohem Festgehalt**
Process for preparing aqueous polymer dispersions with a high solids content
Procédé de préparation de dispersions aqueuses de polymères à teneur en matières solides élevée

(30) Priorität: 18.03.1999 DE 19912191
(43) Veröffentlichungstag der Anmeldung: 20.09.2000
(73) Patentinhaber: Wacker-Chemie GmbH, 81737 München (DE)
(72) Erfinder: Hashemzadeh, Abdulmajid, Dr., 84508 Burgkirchen (DE)
(74) Vertreter: Schuderer, Michael, Dr.

(56) Entgegenhaltungen:
- EP-A- 0 037 923
- EP-A- 0 065 253
- EP-A- 0 120 265
- EP-A- 0 136 649
- EP-A- 0 313 314
- EP-A- 0 784 060
- EP-A- 0 812 103
- DE-A- 1 910 488
- DE-A- 3 109 085
- DE-A- 3 443 964
- DE-A- 4 136 993
- DE-B- 1 100 958

## Beschreibung

Die Erfindung betrifft ein Verfahren zur Herstellung von wäßrigen Polymerdispersionen mit hohem Festgehalt von über 60 % durch Polymerisation von einem oder mehreren ethylenisch ungesättigten Monomeren mittels radikalisch initiierter wäßriger Emulsionspolymerisation in Gegenwart von Emulgatoren und Initiatoren.

Wäßrige Polymerdispersionen werden in einer Vielzahl von Anwendungsgebieten eingesetzt, beispielsweise als Grundstoffe für Farben, Lacke, Klebemittel, als Kaschiermittel für Papier oder als Zusatz in Baustoffen. Die meisten Dispersionen haben einen Feststoffgehalt von 45 bis 60 Gew.-%. Bei höherem Feststoffgehalt steigt die Viskosität mit zunehmendem Feststoffgehalt drastisch an. Die hohen Viskositäten beeinflußen nicht nur die Verarbeitbarkeit negativ, vielmehr kann die hohe Viskosität bereits während der Polymerisation zur Koagulation der Dispersion oder zur Stippenbildung führen.

Aus dem Stand der Technik sind mehrere Verfahren zur Herstellung von hochkonzentrierten Polymerdispersionen mit relativ niederer Viskosität bekannt, welche meist Saatlatices zum Erhalt von hohen Festgehalten einsetzen.

Die EP-A 784060 betrifft ein Verfahren zur Herstellung von Polymerdispersionen mit einem hohen Festgehalt von größer als 67 %, wobei carboxylfunktionelle Monomere mit weiteren ethylenisch ungesättigten Monomeren in Gegenwart von Emulgator polymerisiert werden, und bei einem Monomerumsatz von 40 bis 60 % weiterer Emulgator zugegeben wird. Die WO-A 96/11234 beschreibt eine Vorgehensweise bei der bis zu einem Gewichtsanteil von 80 % Saatlatex vorgelegt wird und der Rest an Monomer, ohne Zugabe von weiterem Emulgator, während der Polymerisation zudosiert wird. In der EP-A 81083 (US-A 4456726) werden zwei Polymerlatices mit unterschiedlicher Teilchengröße vorgelegt und anschließend die Monomere polymerisiert. In der EP-A 554832 wird zur Herstellung von hochkonzentrierten Polymerdispersionen so vorgegangen, daß die Monomere in Gegenwart eines hydrophoben Polymers und in Gegenwart eines copolymerisierbaren Emulgators hergestellt werden.

Die EP-A 37923 beschreibt ein Verfahren zur Herstellung von Polymerdispersionen mit einem Festgehalt von bis zu 75 Gew.-% bei dem mindestens zwei nicht copolymerisierbare Monomere A mit einem mit beiden Monomeren A copolymerisierbaren Monomer B, welches als sogenanntes "Schleppmittel" wirkt, copolymersiert werden, und bei der Polymerisation zunächst nur Emulgator sowie Polymerisationsinhibitoren und wasserlösliche Salze, letztere in relativ hoher Menge, vorgelegt werden, und die Comonomere komplett zudosiert werden.

Die Patentanmeldungen EP-A 567811 (US-A 5496882), EP-A 567819 (US-A 5498655), EP-A 568831 (USA 5442006) und EP-A 568834 (US-A 5340859) betreffen sehr komplizierte Verfahren zur Herstellung von hochkonzentrierten Dispersionen. In der EP-A 567811 wird ein extrem feinteiliger Latex zumindest teilweise vorgelegt und die Monomere unter Einhaltung sehr komplexer Verfahrensbedingungen polymerisiert. Bei der EP-A 567819 wird ein Saatlatexgemisch mit Latexteilchen bis 400 nm Teilchengröße und Latexteilchen bis 100 nm Teilchengröße vorgelegt und die Monomere unter Einhaltung komplexer Verfahrensbedingungen polymerisiert. Die EP-A 567831 betrifft ein Verfahren zur Herstellung von hochkonzentrierten Dispersionen, wobei ein grobteiliger Latex vorgelegt wird und ein feinteiliger Latex sowie die Monomeren dosiert werden. Die EP-A 568834 schließlich betrifft ein Verfahren bei dem zwei Saatlatices, von denen einer sowohl grobteilige als auch feinteilige Polymerteilchen enthält, vorgelegt werden und die Monomere zudosiert werden.

Den bisher im Stand der Technik bekannten Verfahren ist gemeinsam, daß relativ komplexe Verfahren, oft in Kombination mit einer aufwendigen Saatlatex-Technik, zum Erhalt von hochkonzentrierten Polymerdispersionen eingesetzt werden. Es lag somit die Aufgabe zugrunde, ein Verfahren zur Verfügung zu stellen, mit welchem praktisch stippenfreie Dispersionen mit einem hohen Feststoffgehalt über 60 Gew.-% zugänglich werden, ohne daß es des Einsatzes von Saatlatex bedarf.

Gegenstand der Erfindung ist ein Verfahren zur Herstellung von wäßrigen Polymerdispersionen mit hohem Festgehalt von über 60 % durch Polymerisation von einem oder mehreren ethylenisch ungesättigten Monomeren mittels radikalisch initiierter wäßriger Emulsionspolymerisation in Gegenwart von 0.1 bis 5.0 Gew.-% Emulgator, bezogen auf das Gesamtgewicht der Monomeren, und in Gegenwart von Initiator, dadurch gekennzeichnet, daß der Emulgator in einer Menge von 0.001 bis 0.5 Gew.-%, bezogen auf das Gesamtgewicht des Wassers in der Vorlage, zusammen mit einem Anteil von 1 bis 10 Gew.-% der Monomere, bezogen auf das Gesamtgewicht der Monomere, vor dem Start der Polymerisation vorgelegt wird, und der Rest an Emulgator und der Rest an Monomeren nach dem Start der Polymerisation zudosiert werden.

Geeignete Monomere sind ein oder mehrere aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, der Vinylaromaten, Vinylhalogenide, Olefine und Diene.

Bevorzugte Vinylester sind Vinylacetat, Vinylpropionat, Vinylbutyrat, Vinyl-2-ethylhexanoat, Vinyllaurat,1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, Ethylacrylat, n-Butylacrylat und 2-Ethylhexylacrylat.

Als Vinylaromaten bevorzugt sind Styrol, Methylstyrol und Vinyltoluol. Bevorzugtes Vinylhalogenid ist Vinychlorid. Die bevorzugten Olefine sind Ethylen, Propylen und die bevorzugten Diene sind 1.3-Butadien und Isopren.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure.

Weitere Beispiele sind vorvemetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy) -Silane, Vinyltrialkoxysilane und Vinylmethyldialkoxysilane, wobei als Alkoxygruppen beispielsweise Ethoxyund Ethoxypropylenglykolether-Reste enthalten sein können. Genannt seien auch Monomere mit Hydroxy- oder CO-Gruppen, beispielsweise Methacrylsäure- und Acrylsäurehydroxyalkylesterwie Hydroxyethyl-, Hydroxypropyl- oder Hydroxybutylacrylat oder-methacrylat sowie Verbindungen wie Diacetonacrylamid und Acetylacetoxyethylacrylat oder -methacrylat.

Die am meisten bevorzugten Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide vorzugsweise Acrylamid und Methacrylamid; ethylenisch ungesättigte Monomere mit Hydroxy-Gruppen, vorzugsweise Hydroxyethyl-, Hydroxypropyl- oder Hydroxybutyl-acrylat oder -methacrylat.

Die Angaben in Gewichtsprozent addieren sich in den Copolymerisaten jeweils auf 100 Gew.-% auf. Im allgemeinen erfolgt die Monomerauswahl bzw. die Auswahl der Gewichtsanteile der Comonomere so, daß eine Glasübergangstemperatur Tg von -70°C bis +100°C, vorzugsweise -65°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₓ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Besonders bevorzugtwerden Monomere und Monomergemische, welche zu nachstehend aufgeführte Homooder Copolymere führen, wobei sich die Angaben in Gewichtsprozent, gegebenenfalls mit dem Hilfsmonomeranteil, auf 100 Gew.-% aufaddieren:
Aus der Gruppe der Vinylester-Polymerisate Vinylacetat-Ethylen-Copolymere mit einem Ethylengehalt von 1 bis 60 Gew.-%; Vinylacetat-Acrylsäureester-Copolymerisate mit 1 bis 60 Gew.-% Acrylsäureester, insbesonders n-Butylacrylat oder 2-Ethylhexylacrylat, welche gegebenenfalls noch 1 bis 40 Gew.-% Ethylen enthalten.
Aus der Gruppe der (Meth)acrylsäureesterpolymerisate Polymerisate von n-Butylacrylat oder 2-Ethylhexylacrylat; Copolymerisate von Methylmethacrylat mit n-Butylacrylat und/oder 2-Ethylhexylacrylat; Copolymerisate von Methylmethacrylat mit n-Butylacrylat und/oder Ethylacrylat; Copolymerisate von Methylmethacrylat mit 1,3-Butadien.
Aus der Gruppe der Styrol-Polymerisate Styrol-Butadien-Copolymere und Styrol-Acrylsäureester-Copolymere wie Styrol-n-Butylacrylat oder Styrol-2-Ethylhexylacrylat mit einem Styrol-Gehalt von jeweils 10 bis 70 Gew.-%.
Am meisten bevorzugt werden die eben genannten Monomere oder Monomergemische in Gegenwart von 0.1 bis 5 Gew.-% von einem oder mehreren Hilfsmonomeren aus der Gruppe Acrylsäure, Methacrylsäure, Acrylamid, Methacrylamid, Hydroxyethyl-, Hydroxypropyl-, Hydroxybutylacrylat polymerisiert.

Bei der Herstellung nach dem Emulsionspolymerisationsverfahren beträgt die Polymerisationstemperatur im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden. Das Ansatzwasserwird teilweise vorgelegt und der Rest zudosiert, wobei die Zudosierung im Rahmen der Initiatordosierung und der Emulgatordosierung erfolgen kann. Die Vorlage an Wasser wird dabei so bemessen, daß der Emulgatoranteil in der Vorlage 0.001 bis 0.5 Gew.-%, bezogen auf den vorgelegten Wasseranteil beträgt.

Die Initiierung der Polymerisation erfolgt mit den für die Emulsionspolymerisation gebräuchlichen Initiatoren oder Redox-Initiator-Kombinationen. Geeignete organische Initiatoren sind beispielsweise Hydroperoxide wie tert.-Butylhydroperoxid, tert.-Butylperoxopivalat, Cumolhydroperoxid, Isopropylbenzolmonohydroperoxid oder Azoverbindungen wie Azobsisobutyronitril. Geeignete anorganische Initiatoren sind die Natrium- Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew.-%, bezogen auf das Gesamtgewicht der Monomere.

Zur Steuerung des Molekulargewichts können während der Polymerisation regelnde Substanzen eingesetzt werden. Sie werden üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Stabilisierung des Polymerisationsansatzes erfolgt mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0.1 bis 5 Gew.-%, insbesonders 0.5 bis 3 Gew.-%, bezogen auf das Gesamtgewicht der Comonomeren. Geeignete Emulgatoren sind anionische oder nichtionische Emulgatoren oder deren Gemische, beispielweise:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

Bevorzugt werden Gemische aus anionischem Emulgator und nichtionischem Emulgator eingesetzt. Besonders bevorzugt werden Gemische aus einem Ester oder Halbester der Sulfobernsteinsäure mit einwertigen Alkoholen oder Alkylphenolen mit 4 bis 15 C-Atomen im Alkylrest als anionischem Emulgator und einem Alkylpolyglykolether bevorzugt mit 8 bis 40 EO-Einheiten und Alkylresten mit 8 bis 20 C-Atomen als nichtionischem Emulgator in einem Gewichtsverhältnis von 8 : 1 bis 1 : 8. In einer weiteren bevorzugten Ausführungsform werden 0.01 bis 0.4 Gew.-% Emulgator, bezogen auf das Gesamtgewicht des Wassers in der Vorlage, vor dem Start der Polymerisation vorgelegt.

Gegebenenfalls können die Emulgatoren auch im Gemisch mit Schutzkolloiden eingesetzt werden. Beispiele hierfür sind ein oder mehrere Schutzkolloide aus der Gruppe umfassend teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere. Falls Schutzkolloide eingesetzt werden, erfolgt dies vorzugsweise in einer Menge von 0.01 bis 1.0 Gew.-%, bezogen auf die Gesamtmenge der Monomere. Die Schutzkolloide können vor dem Start der Polymerisation vorgelegt werden oder zudosiert werden.

Die Monomere werden in einem Anteil von 1 bis 10 Gew.-% vorgelegt und der Rest nach der Initiierung der Polymerisation zudosiert. Vorzugsweise wird so vorgegangen, daß 4 bis 8 Gew.-%, jeweils bezogen auf das Gesamtgewicht der Monomere, vorgelegt wird und der Rest zudosiert wird. Der Anteil an Hilfsmonomere, insbesondere Hilfsmonomeren aus der Gruppe der ethylenisch ungesättigten Mono- und Dicarbonsäuren, der ethylenisch ungesättigten Carbonsäureamide und der ethylenisch ungesättigten Monomere mit Hydroxy-Gruppen beträgt vorzugsweise nicht mehr als 5 Gew.-% bezogen auf das Gesamtgewicht der vorgelegten Monomere.

Zur Initiierung der Polymerisation kann der Initiator-teilweise vorgelegt und teilweise dosiert werden, oder insgesamt dosiert werden. Die Polymerisation wird durch Erhitzen des Ansatzes auf Polymerisationstemperatur und Zudosierung des Initiators, vorzugsweise in wässriger Lösung, gestartet. Der Rest an Emulgator und der Rest an Monomer, welche nicht vorgelegt wurden, werden nach dem Start der Polymerisation getrennt voneinander zudosiert. Vorzugsweise wird mit der Dosierung 15 Minuten bis 35 Minuten nach dem Start der Polymerisation begonnen.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem Verfahren erhältlichen wässrigen Dispersionen haben einen Feststoffgehalt von über 60 Gew.-%, vorzugsweise von 65 bis 75 Gew.-%.

Die wässrigen Dispersionen mit hohem Festgehalt eignen sich zur Verwendung als Textilbindemittel, zur Verwendung in Beschichtungsmitteln oder in Klebemittel-Zusammensetzungen. Bevorzugt wird die Verwendung in Klebemittel-Zusammensetzungen, besonders bevorzugt als Haftkleber.

Die nachfolgenden Beispiele dienen der weiteren Erläuterung der Erfindung.

### Beispiel 1 (0.01 % Emulgator auf Wasservorlage):

In einem 3-Liter-Dreihalskolben, ausgestattet mit einem Rückflußkühler und Ankerrührer, wurden 305.9 g deionisiertes Wasser, 0.15 g einer 20 %-igen wäßrigen Lösung eines Dialkylsulfosuccinats als anionischem Emulgator (AEROSOL MA®), 0.02 g einer 40 %-igen wäßrigen Lösung eines Isotridecylethoxylats mit 15 EO-Einheiten als nichtionischem Emulgator (GENAPOL X-150®) und 74 g Monomermischung von Dosierung 1 vorgelegt und unter Stickstoff unter Rühren (Drehzahl 150 U/min) auf 75°C aufgeheizt. Bei dieser Temperatur wurde die Initiatorlösung (0.94 g Kaliumperoxodisulfat in 20.4 g Wasser) in den Reaktor gegeben um die Polymerisation zu starten. 30 Minuten nach dem Start der Polymerisation wurde aus separaten Behältern mit der Zudosierung von Monomeren (Dosierung 1), Emulgatoren (Dosierung 2) und Initiatorlösung (Dosierung 3) begonnen. Die Dosierzeiten bei Dosierung 1 und 2 lagen bei 4 Stunden und bei Dosierung 3 bei 4.5 Stunden.

| Dosierung 1 (Monomermischung): | |
|---|---|
| Acrylsäure | 14.6 g |
| Hydroxyethylacrylat | 14.6 g |
| Butylacrylat | 1280 g |
| Ethylacrylat | 87.4 g |
| Methylmethacrylat | 58.3 g |
| Dodecylmercaptan | 0.3 g |

| Dosierung 2 (Emulgatormischung): | |
|---|---|
| Wasser | 135 g |
| Aerosol MA® (als 20 %-ige Lösung) | 82.3 g |
| Genapol X-150® (als 40 %-ige Lösung) | 10.5 g |

| Dosierung 3 (Initiatorlösung): | |
|---|---|
| Wasser | 102 g |
| Kaliumperoxodisulfat | 3.9 g |

Nach den Dosierungen wurde 2 Stunden bei 75°C nachpolymerisiert. Nach der Abkühlung wurde der pH-Wert mit Amoniaklösung auf 4.5 eingestellt. Die erhaltene Dispersion war nach mikroskopischen Untersuchungen praktisch stippenfrei und hatte einen Feststoffgehalt von 70 Gew.-% und eine Brookfield-Viskosität von 236 mPas bei 20 U/min.

### Beispiel 2 (0.07 % Emulgator auf Wasservorlage) :

Wie in Beispiel 1, aber die Emulgatormenge in der Vorlage wurde erhöht (AEROSOL MA® 1.1 g und GENAPOL X-150® 0.1 g). Nach der Abkühlung wurde der pH-Wert mit Amoniaklösung auf 4.5 eingestellt. Die erhaltene Dispersion war nach mikroskopischen Untersuchungen praktisch stippenfrei und hatte einen Feststoffgehalt von 70 Gew.-% und eine Brookfield-Viskosität von 438 mPas bei 20 U/min.

### Beispiel 3 (0.32 % Emulgator auf Wasservorlage):

Wie in Beispiel 1 aber die Emulgatormenge in der Vorlage wurde erhöht (AEROSOL MA® 4.5 g und GENAPOL X-150® 0.4 g). Nach der Abkählungwurde der pH-Wert mit Amoniaklösung auf 4.5 eingestellt. Die erhaltene Dispersion war nach mikroskopischen Untersuchungen praktisch stippenfrei und hatte einen Feststoffgehalt von 70 Gew.-% und eine Brookfield-Viskosität von 1160 mPas be 20 U/min.

### Vergleichsbeispiel 4 (0.57 % Emulgator auf Wasservorlage):

Wie in Beispiel 1, aber die Emulgatormenge in der Vorlage wurde weiter erhöht (AEROSOL MA® 7.5 g und GENAPOL X-150® 0.95 g).
Unter diesen Bedingungen nahm die Viskosität während der Polymerisation so stark zu, daß die Polymerisation abgebrochen werden mußte.

### Beispiel 5 (0.4 % Emulgator auf Wasservorlage):

In einem 3-Liter-Dreihalskolben, ausgestattet mit einem Rückflußkühler und Ankerrührer, wurden 326 g deionisiertes Wasser, 5.7 g einer 20 %-igen wäßrigen Lösung eines Dialkylsulfosuccinats als anionischem Emulgator (AEROSOL MA®), 0.5 g einer 40 %-igen wäßrigen Lösung eines Isotridecylethoxylats mit 15 EO-Einheiten als nichtionischem Emulgator (GENAPOL X-150®), 0.94 g Kaliumperoxodisulfat und 74 g Monomermischung von Dosierung 1 vorgelegt und unter Stickstoff beim Rühren (Drehzahl 150 U/min.) auf 75°C aufgeheizt. Bei 75°C wurde 30 Minuten polymerisiert, anschließend wurde aus separaten Behältern mit der Dosierung von Monomeren (Dosierung 1), Emulgatoren (Dosierung 2) und Initiatorlösung (Dosierung 3) begonnen. Die Dosierzeit bei Dosierung 1 und 2 lag bei 4 Stunden und bei Dosierung 3 bei 4.5 Stunden.

| Dosierung 1 (Monomermischung): | |
|---|---|
| Acrylsäure | 29.1 g |
| Buthylacrylat | 1340 g |
| Methylmethacrylat | 87.3 g |
| Dodecylmercaptan | 0.74 g |

| Dosierung 2 (Emulgatormischung): | |
|---|---|
| Wasser | 93.2 g |
| Aerosol MA® (als 20 %-ige Lösung) | 118.7 g |
| Genapol X-150® (als 40 %-ige Lösung) | 10.1 g |

| Dosierung 3 (Initiatorlösung): | |
|---|---|
| Wasser | 101.9 g |
| Kaliumperoxodisulfat | 3.9 g |

Nach den Dosierungen wurde ca. 2 Stunden bei 75°C nachpolymerisiert. Nach der Abkühlung wurde der pH-Wert mit Amoniaklösung auf 4.5 eingestellt. Die erhaltene Dispersion war nach mikroskopischen Untersuchungen praktisch stippenfrei und hatte einen Feststoffgehalt von 70 Gew.-% und eine Brookfield-Viskosität von 1120 mPas bei 20 U/min.

### Vergleichsbeispiel 6 (0.64 % Emulgator auf Wasservorlage):

Wie in Beispiel 5, aber die Emulgatormenge in der Vorlage wurde erhöht (AEROSOL MA® 9.0 g und GENAPOL X-150® 0.76 g). Unter dieser Bedingung nahm die Viskosität während der Polymerisation so stark zu, daß die Polymerisation abgebrochen werden mußte.

### Vergleichsbeispiel 7 (0.0 % Emulgator auf Wasservorlage):

Es wurde analog Beispiel 5 vorgegangen, mit dem Unterschied, daß kein Emulgator vorgelegt wurde und die gesamte Emulgatormenge zudosiert wurde. Unter diesen Bedingungen wurde eine Dispersion mit hohem Stippengehalt erhalten.

## Patentansprüche

1. Verfahren zur Herstellung von wäßrigen Polymerdispersionen mit hohem Festgehalt von über 60 Gew.-% durch Polymerisation von einem oder mehreren ethylenisch ungesättigten Monomeren mittels radikalisch initiierter wäßriger Emulsionspolymerisation in Gegenwart von 0.1 bis 5.0 Gew.-% Emulgator, bezogen auf das Gesamtgewicht der Monomeren, und in Gegenwart von Initiator, **dadurch gekennzeichnet, daß** der Emulgator in einer Menge von 0.001 bis 0.5 Gew.-%, bezogen auf das Gesamtgewicht des Wassers in der Vorlage, zusammen mit einem Anteil von 1 bis 10 Gew.-% der Monomere, bezogen auf das Gesamtgewicht der Monomere, vor dem Start der Polymerisation vorgelegt wird, und der Rest an Emulgator und der Rest an Monomeren nach dem Start der Polymerisation getrennt voneinander zudosier werden, und die Polymerisation durch Erhitzen des Ansatzes auf Polymerisations temperatur und Zudosierung des Initiators gestartet wird.

2. Verfahren nach Anspruch 1, **dadurch gekennzeichnet, daß** ein oder mehrere Monomere aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, der Vinylaromaten, Vinylhalogenide, Olefine und Diene polymerisiert werden.

3. Verfahren nach Anspruch 1 oder 2, **dadurch gekennzeichnet, daß** in Gegenwart von 0.05 bis 10 Gew.-%, bezogen auf das Gesamtgewicht des Monomergemisches, an einem oder mehreren Hilfsmonomeren aus der Gruppe der ethylenisch ungesättigte Mono- und Dicarbonsäuren, der ethylenisch ungesättigten Carbonsäureamide, der ethylenisch ungesättigten Monomere mit Hydroxy-Gruppen polymerisiert wird.

4. Verfahren nach Anspruch 1 bis 3, **dadurch gekennzeichnet, daß** die Monomerauswahl und die Auswahl der Gewichtsanteile der Comonomere so getroffen wird, daß eine Glasübergangstemperatur Tg von -70°C bis +100°C resultiert.

5. Verfahren nach Anspruch 1 bis 4, **dadurch gekennzeichnet, daß** als Emulgator anionische oder nichtionische Emulgatoren oder deren Gemische eingesetzt werden.

6. Verfahren nach Anspruch 1 bis 5, **dadurch gekennzeichnet, daß** der Anteil an Hilfsmonomere aus der Gruppe der ethylenisch ungesättigten Mono- und Dicarbonsäuren, der ethylenisch ungesättigten Carbonsäureamide und der ethylenisch ungesättigten Monomere mit Hydroxy-Gruppen nicht mehr als 5 Gew.-% bezogen auf das Gesamtgewicht der vorgelegten Monomere beträgt.

## Claims

1. Process for preparing aqueous polymer dispersions having a high solids content of more than 60% by weight by polymerizing one or more ethylenically unsaturated monomers by means of free-radically initiated aqueous emulsion polymerization in the presence of from 0.1 to 5.0% by weight of emulsifier, based on the overall weight of the monomers, and in the presence of initiator, **characterized in that** the emulsifier in an amount of from 0.001 to 0.5% by weight, based on the overall weight of the water in the initial charge, is included in the initial charge together with a fraction of from 1 to 10% by weight of the monomers, based on the overall weight of the monomers, before the beginning of polymerization, and the remainder of emulsifier and the remainder of monomers are metered in separately from one another after the beginning of polymerization, and the polymerization is started by heating the mixture to polymerization temperature and metering in the initiator.

2. Process according to Claim 1, **characterized in that** one or more monomers from the group of the vinyl esters of branched or unbranched carboxylic acids having from 1 to 12 carbon atoms, the esters of acrylic acid and methacrylic acid with branched or unbranched alcohols having 1 to 12 carbon atoms, vinyl aromatics, vinyl halides, olefins, and dienes is or are polymerized.

3. Process according to Claim 1 or 2,
**characterized in that** polymerization is carried out in the presence of from 0.05 to 10% by weight, based on the overall weight of the monomer mixture, of one or more auxiliary monomers from the group of the ethylenically unsaturated mono- and dicarboxylic acids, the ethylenically unsaturated carboxamides, and the ethylenically unsaturated monomers having hydroxyl groups.

4. Process according to any of Claims 1 to 3, **characterized in that** the monomers and the weight fractions of the comonomers are selected so as to give a glass transition temperature Tg of from -70°C to +100°C.

5. Process according to any of Claims 1 to 4, **characterized in that** anionic or nonionic emulsifiers or mixtures thereof are used as emulsifier.

6. Process according to any of Claims 1 to 5, **characterized in that** the fraction of auxiliary monomers from the group of the ethylenically unsaturated mono- and dicarboxylic acids, the ethylenically unsaturated carboxamides and the ethylenically unsaturated monomers having hydroxyl groups is not more than 5% by weight, based on the overall weight of the monomers included in the initial charge.

## Revendications

1. Procédé pour la préparation de dispersions aqueuses de polymères ayant une forte teneur en matière solide de plus de 60 % en poids, par polymérisation d'un ou plusieurs monomères à insaturation éthylénique, par polymérisation en émulsion aqueuse amorcée par voie radicalaire, en présence de 0,1 à 5,0 % en poids d'émulsifiant, par rapport au poids total des monomères, et en présence d'amorceur, **caractérisé en ce que** l'émulsifiant est disposé au préalable, avant le début de la polymérisation, en une quantité de 0,001 à 0,5 % en poids, par rapport au poids total de l'eau dans le mélange de départ, conjointement avec une proportion de 1 à 10 % en poids des monomères, par rapport au poids total des monomères, et le reste de l'émulsifiant et le reste des monomères sont ajoutés séparément de façon réglée après le début de la polymérisation, et la polymérisation est amorcée par chauffage à la température de polymérisation du mélange et ajout de l'amorceur de façon réglée.

2. Procédé selon la revendication 1, **caractérisé en ce qu'**un ou plusieurs monomères choisis dans le groupe des esters vinyliques d'acides carboxyliques ramifiés ou non ramifiés ayant de 1 à 12 atomes de carbone, des esters de l'acide acrylique et de l'acide méthacrylique avec des alcools ramifiés ou non ramifiés ayant de 1 à 12 atomes de carbone, des composés vinyl-aromatiques, des halogénures de vinyle, des oléfines et des diènes sont polymérisés.

3. Procédé selon la revendication 1 ou 2, **caractérisé en ce que** la polymérisation est effectuée en présence de 0,05 à 10 % en poids, par rapport au poids total du mélange de monomères, d'un ou plusieurs monomères auxiliaires choisis dans le groupe des acides mono- et dicarboxyliques à insaturation éthylénique, des carboxamides à insaturation éthylénique, des monomères à insaturation éthylénique comportant des groupes hydroxy.

4. Procédé selon l'une quelconque des revendications 1 à 3, **caractérisé en ce qu** le choix des monomères et le choix des proportions en poids des monomères sont tels qu'il en résulte une température de transition vitreuse Tg de -70°C à +100°C.

5. Procédé selon l'une quelconque des revendications 1 à 4, **caractérisé en ce qu'**on utilise comme émulsifiant des émulsifiants anioniques ou non ioniques, ou des mélanges de ceux-ci.

6. Procédé selon l'une quelconque des revendications 1 à 5, **caractérisé en ce que** la proportion de monomères auxiliaires choisis dans le groupe des acides mono- et dicarboxyliques à insaturation éthylénique, des carboxamides à insaturation éthylénique et des monomères à insaturation éthylénique comportant de groupes hydroxy n'excède pas 5 % en poids, par rapport au poids total des monomères disposés au préalable.
